# EUROPEAN PATENT APPLICATION

(11) **EP 4 530 501 A1**
(43) Date of publication of application: **02.04.2025**
(21) Application number: 24199819.4
(22) Date of filing: 11.09.2024
(51) Int. Cl.: F16H 59/02, F16H 59/10

(54) **WORK VEHICLE**

(30) Priority: 26.09.2023 JP 2023163113
(71) Applicant: Kubota Corporation, Osaka-shi, Osaka 556-8601 (JP)
(72) Inventor: MANJI, Yasuhiro, SAKAI-SHI, OSAKA, 5900908 (JP); YAMADA, Masahiro, SAKAI-SHI, OSAKA, 5900908 (JP); KATO, Takahiro, SAKAI-SHI, OSAKA, 5900908 (JP)
(74) Representative: Cabinet Beau de Loménie

(57) **Abstract**

A work vehicle includes a manual operation member 12 swingable about a first axis P1 and a potentiometer 25 including a detection arm 25b swingable about a second axis P2 parallel to the first axis P1 and having a free end connected to the manual operation member 12 at a connection portion. The potentiometer 25 is configured to detect the position of the manual operation member 12 in response to the detection arm 25b swinging about the second axis P2 as a result of the manual operation member 12 swinging about the first axis P1. The second distance L2 from the second axis P2 to the connection portion is smaller than the first distance L1 from the first axis P1 to the connection portion.

## Description

### Technical Field

The present invention relates to a work vehicle configured to detect the position of a manual operation member as operated.

### Background Art

As disclosed in Patent Literature 1, a work vehicle may include a manually operable shift lever (manual operation member) and a potentiometer configured to detect the position of the shift lever as moved.

This configuration allows the potentiometer to detect the position of the shift lever in response to a worker in the work vehicle moving the shift lever. This in turn allows a travel transmission device to be operated on the basis of a detection value from the potentiometer (that is, the position of the shift lever as moved).

With the shift lever swingable about an axis, positioning the potentiometer on the axis and connecting the potentiometer to the shift lever allows the potentiometer to detect the position of the shift lever as moved.

### Citation List

### Patent Literature

### Patent Literature 1

Japanese Unexamined Patent Application Publication, Tokukai, No. 2020-10436 (see Fig. 2)

### Summary of Invention

### Technical Problem

With the potentiometer positioned on the axis of the manual operation member and connected to the manual operation member, the potentiometer detects the position of the manual operation member as operated within an operation range, the operation range corresponding to the range within which the potentiometer produces a detection value.

The potentiometer is usually capable of producing a detection value within a detection range larger than the operation range for the manual operation member. Even if the manual operation member is operable from one end of its operation range to the other, the detection range of the potentiometer is partially unused, meaning room for improvement in effective use of the detection range.

The present invention has an object of providing a work vehicle configured to effectively use the detection range for a potentiometer in using the potentiometer to detect the position of a manual operation member as operated.

### Solution to Problem

A work vehicle of the present invention includes: a body; a driver section provided for the body; a pair of left and right travel devices provided for the body; at least one manual operation member swingable about a first axis; and at least one potentiometer including a detection arm, the detection arm being swingable about a second axis parallel to the first axis and having a free end connected to the at least one manual operation member at a connection portion, the at least one potentiometer being configured to detect a position of the at least one manual operation member in response to the detection arm swinging about the second axis as a result of the at least one manual operation member swinging about the first axis, the first axis and the second axis being located such that a second distance from the second axis to the connection portion is smaller than a first distance from the first axis to the connection portion.

The work vehicle includes a manual operation member swingable about a first axis and a potentiometer including a detection arm swingable about a second axis and having a free end connected to the manual operation member at a connection portion. The potentiometer is configured to detect the position of the manual operation member in response to the detection arm swinging about the second axis as a result of the manual operation member swinging about the first axis.

The work vehicle configured as above is further configured such that the second distance from the second axis to the connection portion is smaller than the first distance from the first axis to the connection portion.

The above configuration allows the operation of the manual operation member to be amplified before being transmitted to the detection arm, increasing the operation angle of the detection arm over that of the manual operation member. This reduces the unused portion of the detection range of the potentiometer, and thereby allows effective use of the detection range.

The above configuration allows the operation of the manual operation member to be amplified before being transmitted to the detection arm, increasing the operation angle of the detection arm over that of the manual operation member. This allows even a small operation of the manual operation member to be detected accurately by the potentiometer, and thereby improves the accuracy of detecting the operation of the manual operation member as operated.

The work vehicle may preferably be further configured such that the second axis is located such that with the at least one manual operation member at a center position of an operation range for the at least one manual operation member, the second axis is on an imaginary line extending through the connection portion and the first axis as viewed along the first axis.

With the above configuration, positioning the manual operation member at the center position of its operation range positions the detection arm at the center position of its detection range.

Operating the manual operation member from the center position of its operation range toward one side or the other operates the detection arm from the center position of its detection range toward one side or the other. The detection arm is operable symmetrically with respect to the center position of its detection range.

With the detection arm operable symmetrically with respect to the center position of its detection range, the detection arm is not easily operated differently on one side and the other relative to the center position of the detection range. This further improves the accuracy of detecting the position of the manual operation member as operated.

The work vehicle may preferably be further configured such that the second axis is closer to the first axis than the connection portion is.

With the above configuration, the potentiometer and the detection arm are close to the first axis of the manual operation member in its longitudinal direction. This allows the manual operation member and the potentiometer to be disposed in a small area.

The work vehicle may preferably be further configured such that the second axis is within an operation range for the at least one manual operation member as viewed along the first axis.

With the above configuration, the potentiometer and the detection arm are close to the first axis of the manual operation member in its longitudinal direction. Further, the potentiometer and the detection arm are close to the first axis of the manual operation member in the direction orthogonal to its longitudinal direction as well. This allows the manual operation member and the potentiometer to be disposed in a smaller area.

The work vehicle may preferably further include: a left transmission device configured to operate the left travel device; and a right transmission device configured to operate the right travel device, wherein the at least one manual operation member includes: a right manual operation member in a form of a right shift lever for use to operate the right transmission device and disposed at a right portion of the driver section; and a left manual operation member in a form of a left shift lever for use to operate the left transmission device and disposed at a left portion of the driver section, the at least one potentiometer includes: a right potentiometer configured to produce a detection value as a basis for the operation of the right transmission device; and a left potentiometer configured to produce a detection value as a basis for the operation of the left transmission device.

Work vehicles may include a pair of left and right travel devices, a pair of left and right transmission devices configured to operate the respective left and right travel devices independently of each other, and a pair of left and right shift levers as manual operation members for use to operate the respective left and right transmission devices.

The left shift lever is at a left portion of the driver section, whereas the right shift lever is at a right portion of the driver section. A worker in the driver section holds the left shift lever with the left hand for its operation and the right shift lever with the right hand for its operation.

The above configuration allows such work vehicles to appropriately detect the respective positions of the left and right shift levers with use of respective left and right potentiometers for operation of the left and right transmission devices.

The work vehicle may preferably be further configured such that the left potentiometer is between the left shift lever and a lateral center of the driver section, and the right potentiometer is between the right shift lever and the lateral center of the driver section.

With the left and right shift levers at the respective left and right portions of the driver section, the above configuration allows the left and right potentiometers to be between the respective left and right shift levers and the lateral center of the driver section.

This reduces the risk of the potentiometers coming into contact with, for example, an obstacle in the work area for protection of the potentiometers, and thereby improves the durability of the potentiometers.

The work vehicle may preferably be further configured such that the transmission devices are each operable to a neutral position, toward a forward-travel side, and toward a backward-travel side, the shift levers each include: a base section disposed on the body and swingable about the first axis as a lateral axis; and a lever section attached to the base section, including at an upper portion thereof a handle for a worker to hold, and swingable about a third axis orthogonal to the first axis and about the first axis integrally with the base section, the left potentiometer is configured to detect a position of the base section of the left shift lever, the right potentiometer is configured to detect a position of the base section of the right shift lever, the work vehicle further includes a pair of left and right lever guides, the left lever guide includes: a neutral guide portion configured to guide the lever section of the left shift lever laterally at a neutral position of the left shift lever within the operation range thereof; and a forward-travel side travel guide portion and a backward-travel side travel guide portion each configured to guide the lever section of the left shift lever in a front-back direction outside the neutral position of the left shift lever within the operation range thereof, operating the lever section of the left shift lever to the neutral position of the left shift lever within the operation range thereof or to the neutral guide portion operates the left transmission device to the neutral position thereof, operating the lever section of the left shift lever to the forward-travel side travel guide portion operates the left transmission device toward the forward-travel side, and operating the lever section of the left shift lever to the backward-travel side travel guide portion operates the left transmission device toward the backward-travel side, the right lever guide includes: a neutral guide portion configured to guide the lever section of the right shift lever laterally at a neutral position of the right shift lever within the operation range thereof; and a forward-travel side travel guide portion and a backward-travel side travel guide portion each configured to guide the lever section of the right shift lever in the front-back direction outside the neutral position of the right shift lever within the operation range thereof, operating the lever section of the right shift lever to the neutral position of the right shift lever within the operation range thereof or to the neutral guide portion operates the right transmission device to the neutral position thereof, operating the lever section of the right shift lever to the forward-travel side travel guide portion operates the right transmission device toward the forward-travel side, and operating the lever section of the right shift lever to the backward-travel side travel guide portion operates the right transmission device toward the backward-travel side.

The above work vehicles may be configured such that the transmission devices are each operable to a neutral position, toward a forward-travel side, and toward a backward-travel side. Operating a shift lever to a forward-travel side travel guide portion of a lever guide operates the corresponding transmission device toward the forward-travel side. Operating a shift lever to a backward-travel side travel guide portion of the lever guide operates the corresponding transmission device toward the backward-travel side.

Operating a shift lever to its neutral position operates the corresponding transmission device to its neutral position for a stop. Further operating the shift lever to a neutral guide portion of the lever guide leaves the shift lever at its neutral position and the corresponding transmission device at its neutral position.

The above work vehicles are configured such that each shift lever is operable in the front-back direction (that is, to the forward-travel and backward-travel side travel guide portions of the lever guide) and in the left-right direction (that is, to the neutral guide portion of the lever guide). The above configuration, for such work vehicles, involves shift levers each including a base section and a lever section.

The base section is disposed on the body and swingable about the first axis as a lateral axis.

The lever section is attached to the base section, including at an upper portion thereof a handle for a worker to hold, and swingable about a third axis orthogonal to the first axis and about the first axis integrally with the base section.

With the above configuration, each potentiometer detects the position of the base section of the corresponding shift lever as operated. In response to a shift lever being operated in the front-back direction (that is, to the forward-travel and backward-travel side travel guide portions of the lever guide), the corresponding potentiometer detects the position of the shift lever on the basis of its base section. In response to a shift lever being operated to the neutral position, the corresponding potentiometer detects that the shift lever is at its neutral position, on the basis of its base section.

Operating a shift lever from the neutral position to the neutral guide portion of the lever guide swings the lever section of the shift lever laterally relative to the base section, which remains at the neutral position. The corresponding potentiometer thus detects that the shift lever is at its neutral position, on the basis of its base section.

This allows a potentiometer to easily detect the position of the corresponding shift lever as operated in a configuration involving shift levers each operable in the front-back direction (that is, to the forward-travel and backward-travel side travel guide portions of the lever guide) and in the left-right direction (that is, to the neutral guide portion of the lever guide).

### Brief Description of Drawings

Fig. 1 is a left side view of a ride-on mower machine.
Fig. 2 is a plan view of a ride-on mower machine.
Fig. 3 is a plan view of a shift lever, a support case, and their surroundings.
Fig. 4 is a cross-sectional plan view of a shift lever, a support case, and their surroundings.
Fig. 5 is a cross-sectional front view of a shift lever, a support case, and their surroundings.
Fig. 6 is a cross-sectional right side view of a shift lever, a support case, and their surroundings.
Fig. 7 is a diagram illustrating the relationship between the operation range for a shift lever and the detection range of a potentiometer.
Fig. 8 is a diagram illustrating the relationship between the operation range for a shift lever and the detection range of a potentiometer in accordance with a first alternative embodiment.
Fig. 9 is a diagram illustrating the relationship between the operation range for a shift lever and the detection range of a potentiometer in accordance with a second alternative embodiment.

### Description of Embodiments

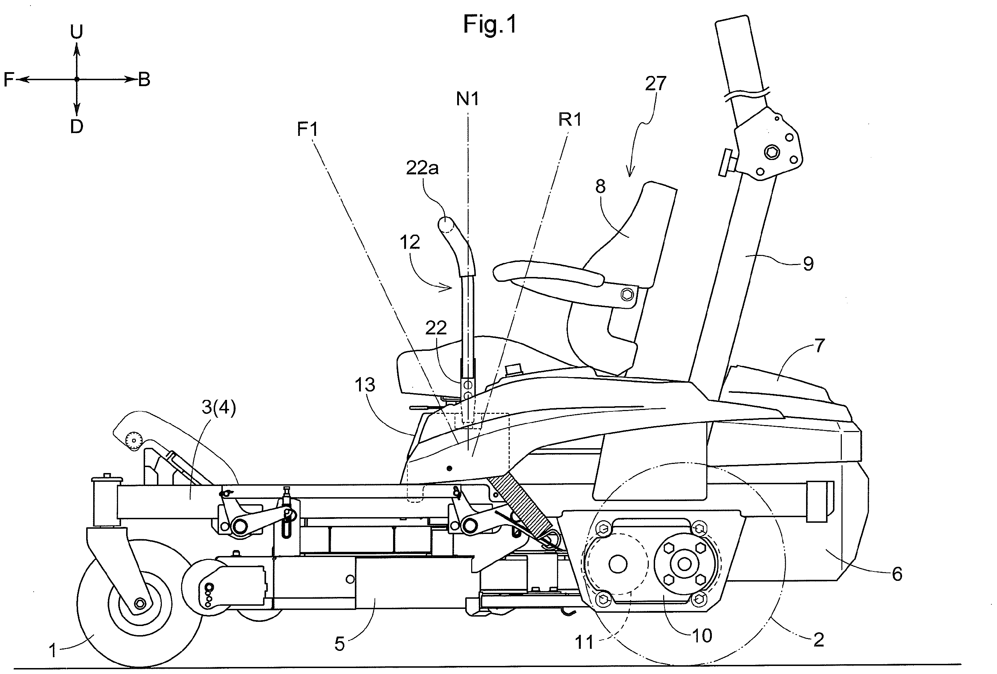

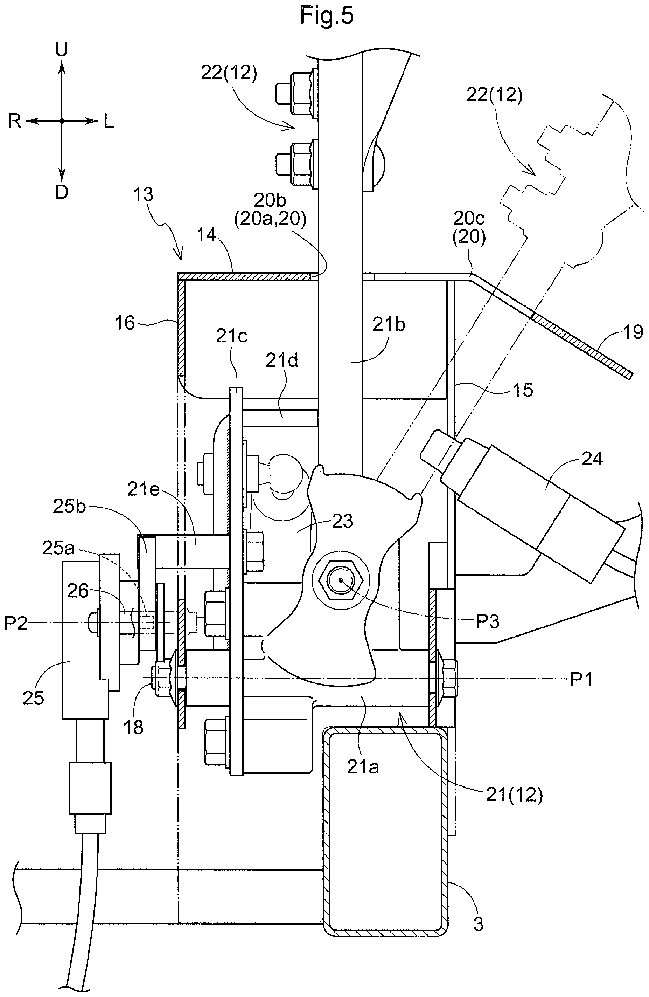

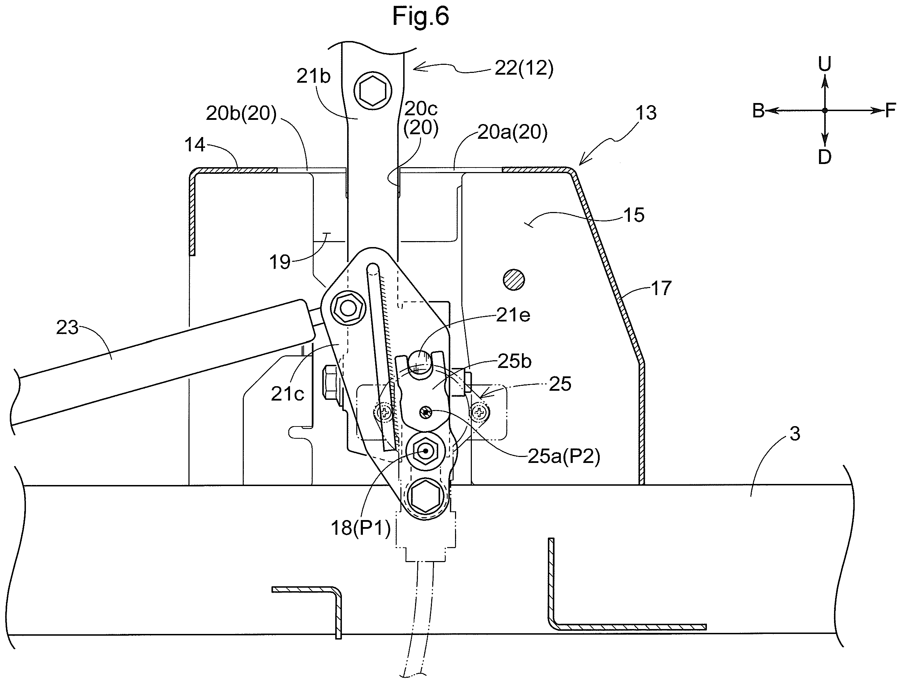

Figs. 1 to 9 illustrate an electrically operated ride-on mower machine as an example work vehicle. Figs. 1 to 9 show arrow F to indicate the front side, arrow B to indicate the back side, arrow U to indicate the upward side, arrow D to indicate the downward side, arrow L to indicate the left side, and arrow R to indicate the right side.

### Overall Configuration of Ride-On Mower

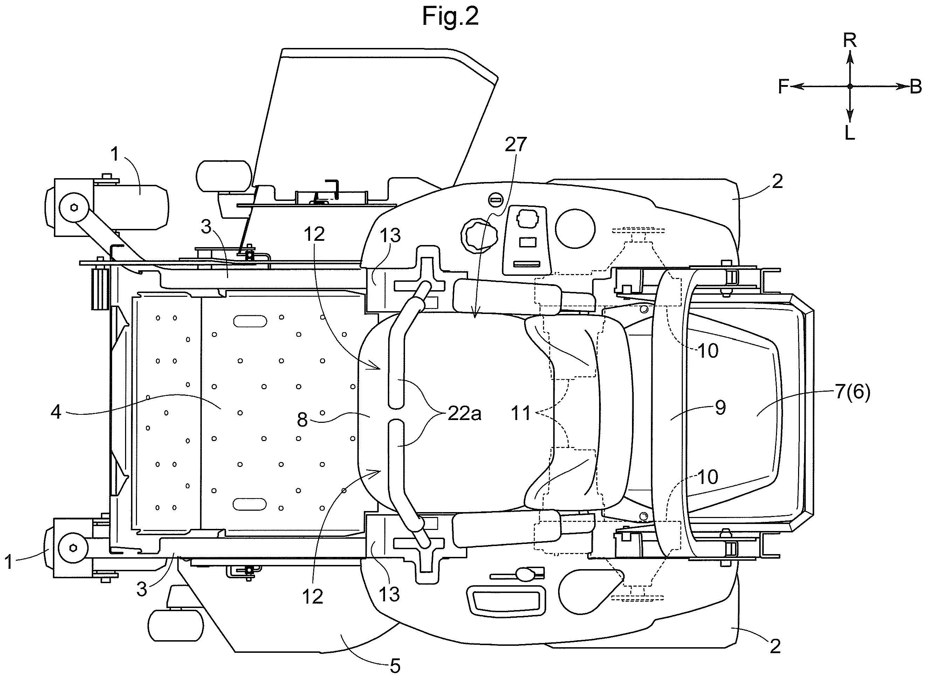

Figs. 1 and 2 each illustrate a ride-on mower machine including a body 4, a pair of left and right front wheels 1, a pair of left and right rear wheels 2 (which is an example of the "travel device"), a mower 5, a battery 6, and a driver section 27.

The body 4 includes a pair of left and right body frame members 3 extending in the front-back direction and two or more lateral frame members (not illustrated in the drawings) extending from one body frame member 3 to the other. The front wheels 1 are at a front portion of the body 4, whereas the rear wheels 2 are at a back portion of the body 4, such that the front and rear wheels 1 and 2 support the body 4.

The mower 5 is attached to a lower portion of the body 4 which lower portion is between the front wheels 1 and the rear wheels 2. The battery 6 is attached to a back portion of the body 4 which back portion is between the rear wheels 2. The mower machine includes a cover 7 covering the battery 6 from above. The driver section 27 is provided for the body 4, and includes a driver's seat 8 and a roll-over protective structure (ROPS) frame 9.

### Configurations of Front and Rear Wheels

As illustrated in Figs. 1 and 2, the front wheels 1 are each in the form of a caster wheel attached to a front portion of the corresponding body frame member 3 and having a direction freely changeable about a vertical axis.

The mower machine includes a pair of left and right rear-wheel transmission cases 10 each coupled to a back portion of the corresponding body frame member 3 and provided with the corresponding rear wheel 2 attached thereto. The mower machine includes a pair of left and right electric motors 11 (which is an example of the "transmission devices"). The right electric motor 11 is attached to a left portion of the right rear-wheel transmission case 10, whereas the left electric motor 11 is attached to a right portion of the left rear-wheel transmission case 10.

The electric motors 11 each transmit motive power through a deceleration mechanism (not illustrated in the drawing) in the corresponding rear-wheel transmission case 10 to the corresponding rear wheel 2 to rotate the rear wheel 2. The electric motors 11 are continuously variable on the normal and reverse sides. The rear wheels 2 are rotatable as continuously varied on the forward-travel and backward-travel sides independently of each other.

### Outline of Operation of Electric Motors

As illustrated in Figs. 1 and 2, the mower machine includes a right shift lever 12 (which is an example of the "manual operation member") to the right of the driver's seat 8 (which is an example of the "right portion of the driver section") and a left shift lever 12 (which is an example of the "manual operation member") to the left of the driver's seat 8 (which is an example of the "left portion of the driver section").

The shift levers 12 are each movable in the front-back direction to a neutral position N1, a forward-travel maximum speed position F1 forward of the neutral position N1, and a backward-travel maximum speed position R1 backward of the neutral position N1. As described later, the mower machine is configured to detect the position of each shift lever 12 as moved and transmit information on the position to a control device (not illustrated in the drawings).

Moving a shift lever 12 to the neutral position N1 causes the control device to stop the corresponding electric motor 11.

Moving a shift lever 12 from the neutral position N1 forward on the forward-travel side causes the control device to rotate the corresponding electric motor 11 in the normal direction for the mower machine to travel forward at a speed corresponding to the position of the shift lever 12 as moved. Moving a shift lever 12 to the forward-travel maximum speed position F1 causes the control device to rotate the corresponding electric motor 11 in the normal direction at its maximum speed.

Moving a shift lever 12 from the neutral position N1 backward on the backward-travel side causes the control device to rotate the corresponding electric motor 11 in the reverse direction for the mower machine to travel backward at a speed corresponding to the position of the shift lever 12 as moved. Moving a shift lever 12 to the backward-travel maximum speed position R1 causes the control device to rotate the corresponding electric motor 11 in the reverse direction at its maximum speed.

Moving the left and right shift levers 12 rotate the respective left and right rear wheels 2 continuously on the forward-travel and backward-travel sides independently of each other. With the front wheels 1 being caster wheels, rotating the rear wheels 2 independently of each other causes the mower machine to travel forward and backward and turn left and right.

### Description Corresponding to Claims That Supports Overall Configuration

The mower machine includes: a body 4; a driver section 27 provided for the body 4, in particular provided on the body 4; and a pair of left and right travel devices (rear wheels 2) provided for the body 4, in particular attached to the body 4.

The mower machine may include: a left transmission device (electric motor 11) configured to operate the left travel device (rear wheel 2); and a right transmission device (electric motor 11) configured to operate the right travel device (rear wheel 2). The mower machine may be further configured such that the transmission devices (electric motors 11) are each operable to a neutral position, toward a forward-travel side, and toward a backward-travel side.

### Configuration of Support Cases Supporting Shift Levers

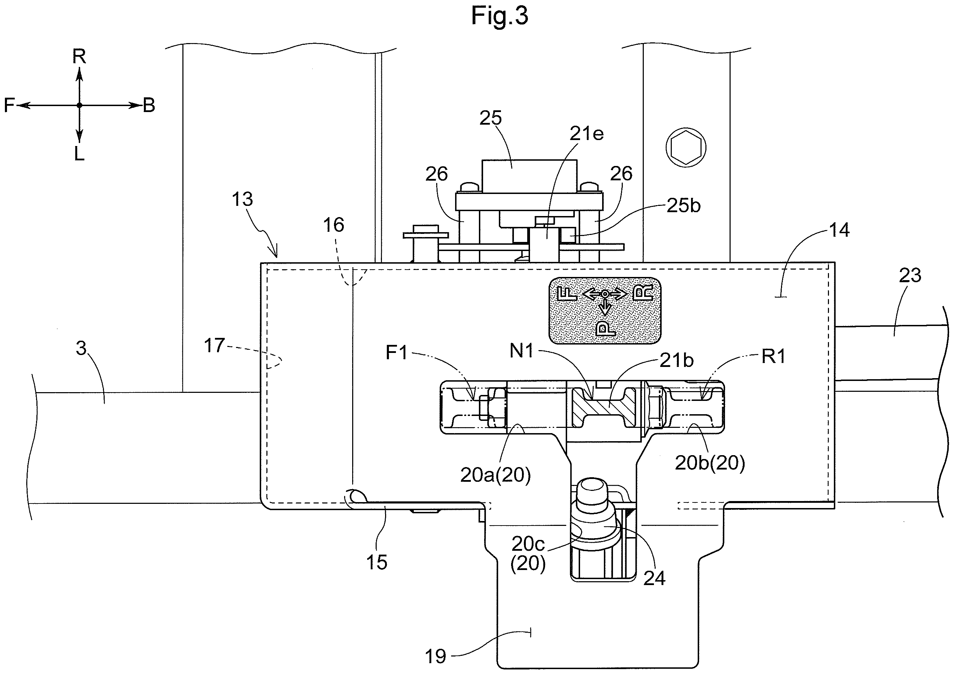

As illustrated in Figs. 1 and 2, the mower machine includes a pair of left and right support cases 13 coupled to the respective left and right body frame members 3. As illustrated in Figs. 3 to 6, the support cases 13 are each in the form of a box including an upper side 14, an outer side 15, an inner side 16, and a front side 17.

The support case 13 includes a shaft 18 extending laterally and attached to respective lower portions of the outer and inner sides 15 and 16. The support case 13 includes a guide plate 19 coupled to the upper side 14 and extending laterally outward from the upper side 14.

As illustrated in Fig. 3, the support case 13 includes a lever guide 20 in the form of an opening extending from the upper face 14 to the guide plate 19. The lever guide 20 includes a first opening section extending in the front-back direction and a second opening section extending laterally outward from an intermediate portion of the first opening section. The two opening sections are connected to each other at a portion corresponding to the neutral position N1 for the corresponding shift lever 12.

The lever guide 20 includes a forward-travel side travel guide portion 20a extending forward from the neutral position N1 and having a forward-travel side front end corresponding to the forward-travel maximum speed position F1 for the corresponding shift lever 12.

The lever guide 20 includes a backward-travel side travel guide portion 20b extending backward from the neutral position N1 and having a backward-travel side back end corresponding to the backward-travel maximum speed position R1 for the corresponding shift lever 12. The lever guide 20 includes a neutral guide portion 20c extending laterally outward from the neutral position N1.

### Configuration of Shift Levers

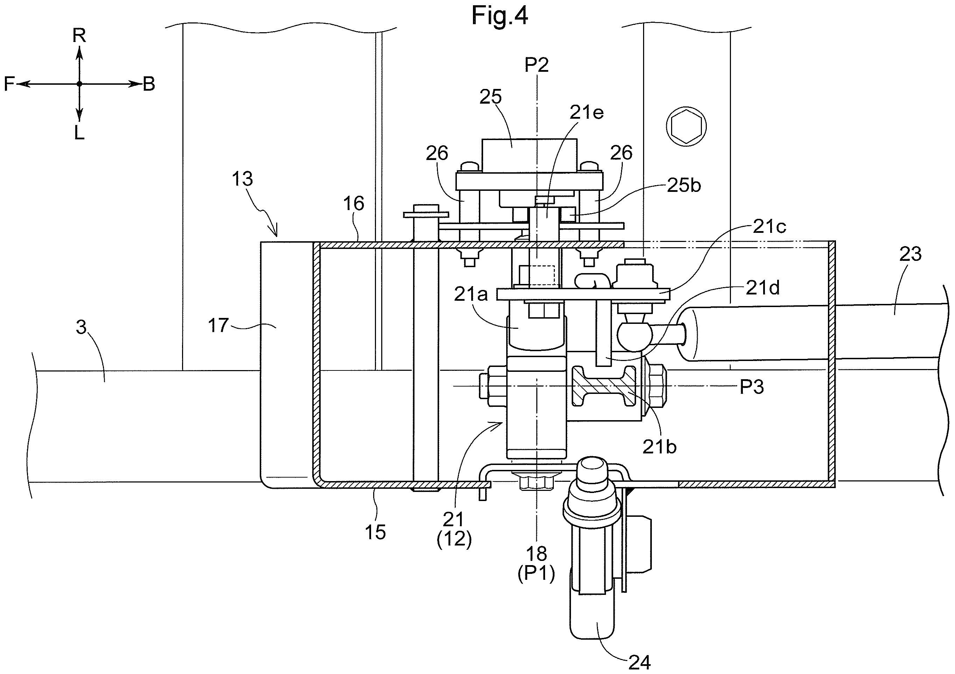

As illustrated in Figs. 4, 5, and 6, the shift levers 12 each include a base section 21 and a lever section 22. The base section 21 includes a boss 21a, an arm 21b, an operation plate 21c, a stopper 21d, and an operation pin 21e (which is an example of the "connection portion").

The boss 21a is attached to the shaft 18 in such a manner as to be swingable about the lateral axis P1 (which is an example of the "first axis") of the shaft 18. The arm 21b is attached to the boss 21a in such a manner as to be swingable about an axis P3 (which is an example of the "third axis") orthogonal to the axis P1.

The operation plate 21c is coupled to the boss 21a and extends upward. The stopper 21d is coupled to an upper end portion of the operation plate 21c and extends toward the arm 21b. The operation pin 21e is coupled to a vertically intermediate portion of the operation plate 21c and extends opposite to the stopper 21d.

As illustrated in Figs. 1 and 2, the lever section 22 is coupled to the arm 21b and extends upward through the corresponding lever guide 20. The lever section 22 includes at an upper portion thereof a handle 22a for a worker to hold. As illustrated in Figs. 4, 5, and 6, the shift level 12 includes a damper 23 connected to the operation plate 21c and the corresponding body frame member 3.

As illustrated in Figs. 3 to 6, a worker on the driver's seat 8 holds the handle 22a of the shift lever 12 (that is, the lever section 22) and moves the handle 22a in the front-back direction to swing the shift lever 12 (that is, the base section 21 and the lever section 22) about the axis P1 along the travel guide portions 20a and 20b of the lever guide 20. The damper 23 prevents a sharp front-back movement of the shift lever 12.

Moving the shift lever 12 laterally outward from the neutral position N1 swings the lever section 22 about the axis P3 relative to the base section 21. The lever section 22 enters the neutral guide portion 20c with the base section 21 remaining at the neutral position N1.

Moving the lever section 22 from the neutral guide portion 20c to the neutral position N1 brings the lever section 22 into contact with the stopper 21d and stops the lever section 22 at the neutral position N1.

The support case 13 is provided with a neutral sensor 24 attached to the outer side 15 and configured to detect a movement of the lever section 22 into the neutral guide portion 20c.

### Description Corresponding to Claims That Supports Shift Levers

The mower machine includes: at least one manual operation member (shift lever 12) swingable about a first axis (axis P1).

The mower machine may be configured such that the at least one manual operation member (shift lever 12) includes: a right manual operation member (shift lever 12) in a form of a right shift lever 12 for use to operate the right transmission device (electric motor 11) and disposed at a right portion of the driver section 27; and a left manual operation member (shift lever 12) in a form of a left shift lever 12 for use to operate the left transmission device (electric motor 11) and disposed at a left portion of the driver section 27.

The mower machine may be further configured such that the shift levers 12 each include: a base section 21 disposed on the body 4 and swingable about the first axis (axis P1) as a lateral axis; and a lever section 22 attached to the base section 21, including at an upper portion thereof a handle 22a for a worker to hold, and swingable about a third axis (axis P3) orthogonal to the first axis (axis P1) and about the first axis (axis P1) integrally with the base section 21.

The above mower machine includes a pair of left and right lever guides 20, wherein the left lever guide 20 includes: a neutral guide portion 20c configured to guide the lever section 22 of the left shift lever 12 laterally at a neutral position N1 of the left shift lever 12 within the operation range thereof; a forward-travel side travel guide portion 20a and a backward-travel side travel guide portion 20b each configured to guide the lever section 22 of the left shift lever 12 in a front-back direction outside the neutral position N1 of the left shift lever 12 within the operation range thereof, and the right lever guide 20 includes: a neutral guide portion 20c configured to guide the lever section 22 of the right shift lever 12 laterally at a neutral position N1 of the right shift lever 12 within the operation range thereof; and a forward-travel side travel guide portion 20a and a backward-travel side travel guide portion 20b each configured to guide the lever section 22 of the right shift lever 12 in the front-back direction outside the neutral position N1 of the right shift lever 12 within the operation range thereof.

The above mower machine is further configured such that operating the lever section 22 of the left shift lever 12 to the neutral position N1 of the left shift lever 12 within the operation range thereof or to the neutral guide portion 20c operates the left transmission device to (electric motor 11) the neutral position thereof, operating the lever section 22 of the left shift lever 12 to the forward-travel side travel guide portion 20a operates the left transmission device (electric motor 11) toward the forward-travel side, and operating the lever section 22 of the left shift lever 12 to the backward-travel side travel guide portion 20b operates the left transmission device (electric motor 11) toward the backward-travel side, operating the lever section 22 of the right shift lever 12 to the neutral position N1 of the right shift lever 12 within the operation range thereof or to the neutral guide portion 20c operates the right transmission device (electric motor 11) to the neutral position thereof, operating the lever section 22 of the right shift lever 12 to the forward-travel side travel guide portion 20a operates the right transmission device (electric motor 11) toward the forward-travel side, and operating the lever section 22 of the right shift lever 12 to the backward-travel side travel guide portion 20b operates the right transmission device (electric motor 11) toward the backward-travel side.

### Configuration of Potentiometers for Detecting Positions of Shift Levers as Moved

As illustrated in Figs. 3 to 6, the mower machine includes a pair of left and right potentiometers 25 each disposed between the lateral center of the body 4 and the inner side 16 of the corresponding support case 13 and attached to the inner side 16 with use of an attachment member 26.

The inner side 16 is between the lateral center of the body 4 and the outer side 15. The potentiometer 25 is thus between the lateral center of the driver section 27 and the corresponding shift lever 12 (that is, on the side of the driver's seat 8).

The potentiometer 25 includes a detection shaft 25a and a detection arm 25b. The detection shaft 25a is swingable about a lateral axis P2 (which is an example of the "second axis"). The detection arm 25b is attached to the detection shaft 25a and extends upward. The detection shaft 25a (axis P2) extends laterally as the shaft 18 (axis P1) and is parallel thereto.

The detection arm 25b includes a free end engaged with the operation pin 21e of the base section 21 of the corresponding shift lever 12, and is connected to the operation pin 21e.

Swinging the corresponding shift lever 12 (that is, the base section 21 and the lever section 22) about the axis P1 along the travel guide portions 20a and 20b of the lever guide 20 as described above swings the detection arm 25b about the axis P2 together with the operation plate 21c and the operation pin 21e. The potentiometer 25 detects the position of the corresponding shift lever 12 as moved with use of the base section 21 (that is, the operation plate 21c and the operation pin 21e).

Moving the corresponding shift lever 12 from the neutral position N1 into the neutral guide portion 20c swings the lever section 22 laterally outward about the axis P3 relative to the base section 21 remaining at the neutral position N1. The potentiometer 25 continues to detect that the corresponding shift lever 12 is at the neutral position N1.

Detecting the position of the right shift lever 12 with use of the right potentiometer 25 allows the control device to stop the right electric motor 11 or rotate the right electric motor 11 in the normal direction (that is, on the forward-travel side) or in the reverse direction (that is, on the backward-travel side) as described above.

Detecting the position of the left shift lever 12 with use of the left potentiometer 25 allows the control device to stop the left electric motor 11 or rotate the left electric motor 11 in the normal direction (that is, on the forward-travel side) or in the reverse direction (that is, on the backward-travel side) as described above.

### Description Corresponding to Claims That Supports Configuration of Potentiometers for Detecting Positions of Shift Levers as Moved

The mower machine includes at least one potentiometer 25 including a detection arm 25b, the detection arm 25b being swingable about a second axis (axis P2) parallel to the first axis (axis P1) and having a free end connected to the at least one manual operation member (shift lever 12) at a connection portion. The mower machine may be configured such that the left potentiometer 25 is between the left shift lever 12 and a lateral center of the driver section 27, and the right potentiometer 25 is between the right shift lever 12 and the lateral center of the driver section 27.

The above mower machine is configured such that the at least one potentiometer 25 is configured to detect a position of the at least one manual operation member (shift lever 12) in response to the detection arm 25b swinging about the second axis (axis P2) as a result of the at least one manual operation member (shift lever 12) swinging about the first axis (axis P1).

The mower machine may be further configured such that the at least one potentiometer 25 includes: a right potentiometer 25 configured to produce a detection value as a basis for the operation of the right transmission device (electric motor 11); and a left potentiometer 25 configured to produce a detection value as a basis for the operation of the left transmission device (electric motor 11).

### Operation Range for Shift Levers

As illustrated in Figs. 1 and 3, each shift lever 12 (that is, the arm 21b) is movable to the neutral position N1, the forward-travel maximum speed position F1, and the backward-travel maximum speed position R1.

The backward-travel maximum speed position R1 is apart from the neutral position N1 by a distance smaller than the distance by which the forward-travel maximum speed position F1 is apart from the neutral position N1. The backward-travel maximum speed position R1 corresponds to a speed lower than the speed to which the forward-travel maximum speed position F1 corresponds.

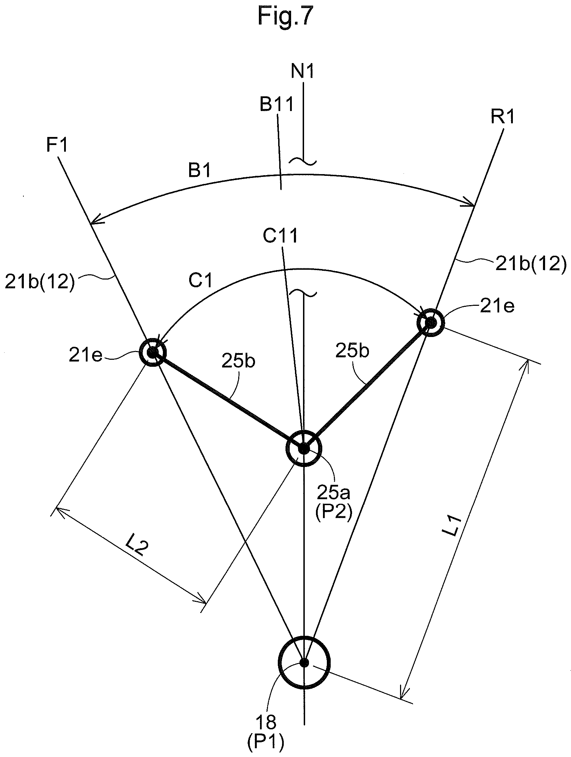

As illustrated in Fig. 7, the shift lever 12 (that is, the arm 21b) is movable over an operation range (operation angle) B1 between the forward-travel maximum speed position F1 and the backward-travel maximum speed position R1. The operation range (operation angle) B1 has a center position B11 on the side of the forward-travel maximum speed position F1 relative to the neutral position N1.

### Detection Range for Potentiometers

As illustrated in Figs. 3 to 6, the potentiometers 25 each include a detection arm 25b connected to the corresponding shift lever 12 (arm 21b) with the operation pin 21e in-between.

As illustrated in Fig. 7, the detection shaft 25a (axis P2) coincides with the neutral position N1 as viewed along the axis P1.

As viewed along the axis P1, the detection shaft 25a (axis P2) is closer to the shaft 18 (axis P1) than is the operation pin 21e, and is within the operation range (operation angle) B1 (that is, between the forward-travel maximum speed position F1 and backward-travel maximum speed position R1).

The description below uses the term "first distance L1" (which is an example of the "first distance") to refer to the distance from the shaft 18 (axis P1) of each shift lever 12 (that is, the arm 21b) to the operation pin 21e.

The description below uses the term "second distance L2" (which is an example of the "second distance") to refer to the distance from the detection shaft 25a (axis P2) to the operation pin 21e.

Pivoting the shift lever 12 (arm 21b) about the shaft 18 (axis P1) changes the second distance L2 slightly such that the second distance L2 is at its largest with the shift lever 12 at the forward-travel maximum speed position F1. The second distance L2 is, even at its largest, smaller than the first distance L1.

The detection arm 25b has a detection range (detection angle) C1 with a center position C11 on the side of the forward-travel maximum speed position F1 relative to the neutral position N1.

The potentiometer 25 is capable of producing a detection value within a detection range (detection angle) C1, which corresponds to the angle over which the detection shaft 25a is rotatable. Moving the shift lever 12 (arm 21b) to the forward-travel maximum speed position F1 (which is a first end of the operation range [operation angle] B1 of the manual operation member) positions the detection arm 25b at a first end of the detection range C1.

Further, moving the shift lever 12 (arm 21b) to the backward-travel maximum speed position R1 (which is a second end of the operation range [operation angle] B1 of the manual operation member) positions the detection arm 25b at a second end of the detection range C1. The detection range C1 is larger than the operation range B1.

The above configuration amplifies the movement of the shift lever 12 about the shaft 18 (axis P1) before transmitting the movement to the detection arm 25b for an increase in the movement of the detection arm 25b over that of the shift lever 12.

### Description Corresponding to Claims That Supports Operation Range of Shift Levers and Detection Range for Potentiometers

The mower machine is configured such that the first axis and the second axis are located such that a second distance L2 from the second axis (axis P2) to the connection portion is smaller than a first distance L1 from the first axis (axis P1) to the connection portion.

The mower machine may be further configured such that the second axis (axis P2) is closer to the first axis (axis P1) than the connection portion is.

The above mower machine may be further configured such that the second axis (axis P2) is within an operation range (operation angle) B1 for the at least one manual operation member (shift lever 12) as viewed along the first axis (axis P1).

### First Alternative Embodiment

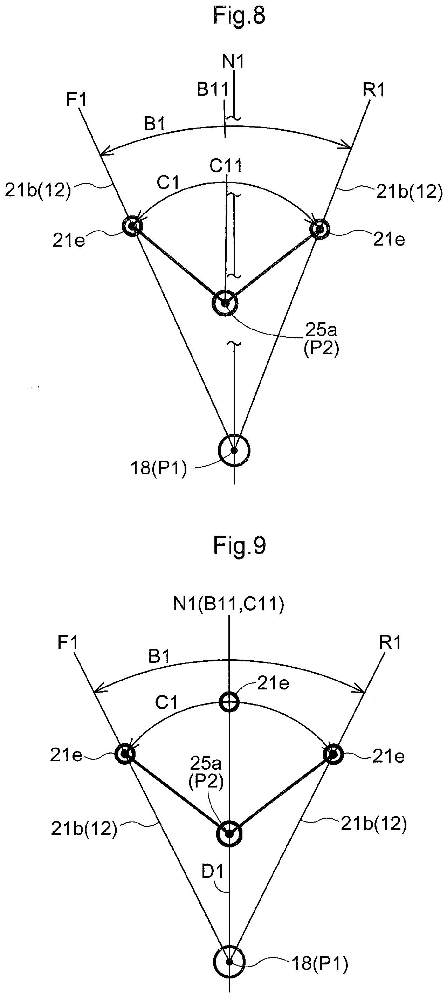

The configuration illustrated in Fig. 7 may be altered such that the detection shaft 25a (axis P2) does not coincide with the neutral position N1 as viewed along the axis P1 (see Fig. 8).

If the backward-travel maximum speed position R1 is apart from the neutral position N1 by a distance smaller than the distance by which the forward-travel maximum speed position F1 is apart from the neutral position N1, the detection shaft 25a (axis P2) is preferably on the side of the forward-travel maximum speed position F1 relative to the neutral position N1 as illustrated in Fig. 8.

### Second Alternative Embodiment

The configuration illustrated in Fig. 7 may be altered as illustrated in Fig. 9 in the case where the backward-travel maximum speed position R1 is apart from the neutral position N1 by a distance equal to the distance by which the forward-travel maximum speed position F1 is apart from the neutral position N1 (that is, the backward-travel maximum speed position R1 corresponds to a speed equal to the speed to which the forward-travel maximum speed position F1 corresponds).

As illustrated in Fig. 9, the detection shaft 25a (axis P2) coincides with the neutral position N1 as viewed along the axis P1. The range on the side of the forward-travel maximum speed position F1 is thus symmetrical to that on the side of the backward-travel maximum speed position R1 relative to the neutral position N1 as viewed along the axis P1. This configuration involves a coincidence between the neutral position N1, the center position B11 of the operation range (operation angle) B1, and the center position C11 of the detection range (detection angle) C1.

Fig. 9 shows an imaginary line D1 extending through the operation pin 21e of the shift lever 12 (arm 21b) (or the free end of the detection arm 25b) and the shaft 18 (axis P1) as viewed along the axis P1.

Moving the shift lever 12 (arm 21b) to the neutral position N1 (center position B11, C11) (that is, positioning the operation pin 21e at the neutral position N1) results in the imaginary line D1 being positioned at the neutral position N1, that is, the detection shaft 25a (axis P2).

### Description Corresponding to Claims That Supports Operation Range of Shift Levers and Detection Range for Potentiometers

The mower machine may be configured such that the second axis (axis P2) is located such that with the at least one manual operation member (shift lever 12) at a center position B11 of an operation range (operation angle) B1 for the at least one manual operation member (shift lever 12), the second axis (axis P2) is on an imaginary line D1 extending through the connection portion and the first axis (axis P1) as viewed along the first axis (axis P1).

### Third Alternative Embodiment

The configurations illustrated in Figs. 7, 8, and 9 may each be altered such that the detection arm 25b and the operation pin 21e are inverted so that the detection arm 25b extends downward from the detection shaft 25a to be connected to the operation pin 21e.

With the above configuration, as viewed along the axis P1, the detection shaft 25a (axis P2) is farther from the shaft 18 (axis P1) than is the operation pin 21e, and is within the operation range (operation angle) B1 (that is, between the forward-travel maximum speed position F1 and backward-travel maximum speed position R1).

### Fourth Alternative Embodiment

The potentiometer 25 may be capable of producing a detection value within a detection range (detection angle), which corresponds to the angle over which the detection shaft 25a is rotatable, the detection range being larger than the detection range (detection angle) C1 illustrated in each of Figs. 7, 8, and 9.

With the above configuration, moving the shift lever 12 (arm 21b) to the forward-travel maximum speed position F1 (which is a first end of the operation range [operation angle] B1 of the manual operation member) may not position the detection arm 25b at a first end of the detection range.

Further, moving the shift lever 12 (arm 21b) to the backward-travel maximum speed position R1 (which is a second end of the operation range [operation angle] B1 of the manual operation member) may not position the detection arm 25b at a second end of the detection range.

### Fifth Alternative Embodiment

The mower machine may include, instead of the electric motors 11, an engine (not illustrated in the drawings) and a pair of left and right hydrostatic, continuously variable transmission devices (which is an example of the "transmission devices") (not illustrated in the drawings).

With the above configuration, the engine transmits motive power to the right continuously variable transmission device, which then varies the motive power and transmits the varied motive power to the right rear wheel 2. Further, the engine transmits motive power to the left continuously variable transmission device, which then varies the motive power and transmits the varied motive power to the left rear wheel 2. This alternative embodiment includes a pair of left and right electrically operated actuators (not illustrated in the drawings) configured to operate the respective continuously variable transmission devices on the basis of the respective positions of the shift levers 12 as moved.

### Sixth Alternative Embodiment

The mower machine may include, instead of the front and rear wheels 1 and 2, a pair of left and right crawler travel devices (not illustrated in the drawings).

The mower machine may, in this case, be configured such that the engine transmits motive power to a continuously variable transmission device (which is an example of the "transmission devices"), which then varies the motive power and transmits the varied motive power to a pair of left and right travel devices, and include an electrically operated actuator (not illustrated in the drawings) configured to operate the continuously variable transmission device on the basis of the position of a shift lever 12 as moved.

### Seventh Alternative Embodiment

The driver section 27 may omit the driver's seat 8, in which case a worker stands in the driver section 27 when riding on the mower machine.

### Eighth Alternative Embodiment

The present invention may be applied as described below to a work vehicle provided with (i) a lifting and lowering device (not illustrated in the drawings) configured to lift and lower an implement such as a rotary tiller device (not illustrated in the drawings) attached to the body 4 and (ii) a lifting and lowering lever (which is an example of the "manual operation member") (not illustrated in the drawings) for use to lift and lower the lifting and lowering device.

The work vehicle include a potentiometer 25 configured to detect the position of the lifting and lowering lever as moved. Moving the lifting and lowering lever within an operation range (operation angle) B 1 operates the lifting and lowering device to position the implement at a height corresponding to the position of the lifting and lowering lever as moved.

The operation range (operation angle) B 1 has a lowest position corresponding to the lowest position of the lifting and lowering device and a highest position corresponding to the highest position of the lifting and lowering device.

### Industrial Applicability

The present invention is applicable not only to ride-on mower machines but also to tractors and construction work vehicles such as backhoes and wheel loaders.

### Reference Signs List

- 2: Rear wheel (traveling device)
- 4: Body
- 11: Electric motor (transmission device)
- 12: Shift lever (manual operation member)
- 20: Lever guide
- 20a: Travel guide portion
- 20b: Travel guide portion
- 20c: Neutral guide portion
- 21: Base section
- 21e: Operation pin (connection portion)
- 22: Lever section
- 22a: Handle
- 25: Potentiometer
- 25b: Detection arm
- 27: Driver section
- B1: Operation range
- B11: Center position
- C1: Detection range
- D1: Imaginary line
- L1: First distance
- L2: Second distance
- N1: Neutral position
- P1: Axis (first axis)
- P2: Axis (second axis)
- P3: Axis (third axis)

## Claims

1. A work vehicle, comprising:
a body (4);
a driver section (27) provided for the body (4);
a pair of left and right travel devices (2) provided for the body (4);
at least one manual operation member (12) swingable about a first axis (P1); and
at least one potentiometer (25) including a detection arm (25b), the detection arm (25b) being swingable about a second axis (P2) parallel to the first axis (P1) and having a free end connected to the at least one manual operation member (12) at a connection portion (21e),
the at least one potentiometer (25) being configured to detect a position of the at least one manual operation member (12) in response to the detection arm (25b) swinging about the second axis (P2) as a result of the at least one manual operation member (12) swinging about the first axis (P1),
the first axis (P1) and the second axis (P2) being located such that a second distance (L2) from the second axis (P2) to the connection portion (21e) is smaller than a first distance (L1) from the first axis (P1) to the connection portion (21e).

2. The work vehicle according to claim 1, wherein
the second axis (P2) is located such that when the at least one manual operation member (12) is located at a center position (N1) of an operation range (B1) for the at least one manual operation member (12), the second axis (P2) is on an imaginary line (D1) extending through the connection portion (21e) and the first axis (P1) as viewed along the first axis (P1).

3. The work vehicle according to claim 1 or 2, wherein
the second axis (P2) is closer to the first axis (P1) than the connection portion (21e) is.

4. The work vehicle according to claim 3, wherein
the second axis (P2) is within an operation range (B1) for the at least one manual operation member (12) as viewed along the first axis (P1).

5. The work vehicle according to any one of claims 1 to 4, further comprising:
a left transmission device (11) configured to operate the left travel device (2); and
a right transmission device (11) configured to operate the right travel device (2),
wherein the at least one manual operation member (12) includes:
a left shift lever (12) for use to operate the left transmission device (11) and disposed at a left portion of the driver section (27); and
a right shift lever (12) for use to operate the right transmission device (11) and disposed at a right portion of the driver section (27),
the at least one potentiometer (25) includes:
a left potentiometer (25) configured to produce a detection value as a basis for the operation of the left transmission device (11); and
a right potentiometer (25) configured to produce a detection value as a basis for the operation of the right transmission device (11).

6. The work vehicle according to claim 5, wherein
the left potentiometer (25) is between the left shift lever (12) and a lateral center of the driver section (27), and
the right potentiometer (25) is between the right shift lever (12) and the lateral center of the driver section (27).

7. The work vehicle according to claim 5 or 6, wherein
the transmission devices (11) are each operable to a neutral position (N1), toward a forward-travel side, and toward a backward-travel side,
the shift levers (12) each include:
a base section (21) disposed on the body (4) and swingable about the first axis (P1) as a lateral axis; and
a lever section (22) attached to the base section (21), including at an upper portion thereof a handle (22a) for a worker to hold, and swingable about a third axis (P3) orthogonal to the first axis (P1) and about the first axis (P1) integrally with the base section (21),
the left potentiometer (25) is configured to detect a position of the base section (21) of the left shift lever (12),
the right potentiometer (25) is configured to detect a position of the base section (21) of the right shift lever (12),
the work vehicle further comprises a pair of left and right lever guides (20),
the left lever guide (20) includes:
a neutral guide portion (20c) configured to guide the lever section (22) of the left shift lever (12) laterally at a neutral position (N1) of the left shift lever (12) within the operation range (B1) thereof; and
a forward-travel side travel guide portion (20a) and a backward-travel side travel guide portion (20b) each configured to guide the lever section (22) of the left shift lever (12) in a front-back direction outside the neutral position (N1) of the left shift lever (12) within the operation range (B1) thereof,
operating the lever section (22) of the left shift lever (12) to the neutral position (N1) of the left shift lever (12) within the operation range (B1) thereof or to the neutral guide portion (20c) operates the left transmission device (11) to the neutral position (N1) thereof,
operating the lever section (22) of the left shift lever (12) to the forward-travel side travel guide portion (20a) operates the left transmission device (11) toward the forward-travel side, and
operating the lever section (22) of the left shift lever (12) to the backward-travel side travel guide portion (20b) operates the left transmission device (11) toward the backward-travel side,
the right lever guide (20) includes:
a neutral guide portion (20c) configured to guide the lever section (22) of the right shift lever (12) laterally at a neutral position (N1) of the right shift lever (12) within the operation range (B1) thereof; and
a forward-travel side travel guide portion (20a) and a backward-travel side travel guide portion (20b) each configured to guide the lever section (22) of the right shift lever (12) in the front-back direction outside the neutral position (N1) of the right shift lever (12) within the operation range (B1) thereof,
operating the lever section (22) of the right shift lever (12) to the neutral position (N1) of the right shift lever (12) within the operation range (B1) thereof or to the neutral guide portion (20c) operates the right transmission device (11) to the neutral position (N1) thereof,
operating the lever section (22) of the right shift lever (12) to the forward-travel side travel guide portion (20a) operates the right transmission device (11) toward the forward-travel side, and
operating the lever section (22) of the right shift lever (12) to the backward-travel side travel guide portion (20b) operates the right transmission device (11) toward the backward-travel side.
